# EUROPÄISCHE PATENTSCHRIFT

(11) **EP 1 005 269 B1**
(45) Veröffentlichungstag und Bekanntmachung des Hinweises auf die Patenterteilung: **22.01.2003**
(21) Anmeldenummer: 98947424.2
(22) Anmeldetag: 08.08.1998
(51) Int. Cl.: A01N 25/04

(54) **MIKROEMULSIONEN**
MICROEMULSIONS
MICROEMULSIONS

(30) Priorität: 18.08.1997 DE 19735790
(43) Veröffentlichungstag der Anmeldung: 07.06.2000
(73) Patentinhaber: Cognis Deutschland GmbH & Co. KG, 40589 Düsseldorf (DE)
(72) Erfinder: FÖRSTER, Thomas, D-40699 Erkrath (DE); CLAAS, Marcus, D-40723 Hilden (DE); WOLLENWEBER, Horst-Werner, D-40597 Düsseldorf (DE)
(86) Internationale Anmeldenummer: EP9805049
(87) Internationale Veröffentlichungsnummer: WO99008517

(56) Entgegenhaltungen:
- EP-A- 0 299 654
- EP-A- 0 511 611
- EP-A- 0 729 700
- WO-A-91/00010
- WO-A-93/22917
- WO-A-95/03881
- WO-A-95/28083
- WO-A-96/08150
- WO-A-96/34078
- WO-A-97/00609
- US-H- H 224

## Beschreibung

Die vorliegende Erfindung betrifft flüssige Wirkstoffkonzentrate, die wasserunlösliche agrochemische Wirkstoffe enthalten sowie ein Verfahren zur Herstellung derartiger Konzentrate.

Agrochemische Wirkstoffe, wie beispielsweise Biozide, Herbizide, Insektizide oder auch Düngemittel enthalten in Wasser schlecht oder unlösliche organische Verbindungen. Um derartige Wirkstoffe in eine für den Anwender leicht handhabbare Form zu bringen, werden sie häufig als konzentrierte Lösung in geeigneten organischen Lösungsmitteln, z.B. Alkylbenzol, vertrieben. Vor dem Einsatz müssen diese Lösungen dann weiter auf die gewünschten Konzentrationen verdünnt werden. Aus wirtschaftlichen und vor allem ökologischen Gründen ist der Einsatz von diesen organischen Lösungsmitteln aber unerwünscht. Es besteht daher das Bedürfnis nach wäßrig formulierten Konzentraten derartiger Wirkstoffe.

**Die WO 95/28083** beschreibt wäßrige Tensidmischungen, enthaltend ein Alkylnaphthalinsulfonat und Alkyl(oligo)glycoside sowie mindestens ein Pestizid und gegebenenfalls weitere agrochemische Wirkstoffe. Aus der **EP 511 611 B1** sind wäßrige Lösungen des herbiziden Wirkstoffs Glufosinate-ammonium bekannt. In der Beschreibung wird auch erwähnt, daß die beanspruchten Mittel gegebenenfalls auch weitere wasserunlösliche Bestandteile in emulgierter Form enthalten können. In den Beispielen werden aber nur wäßrige Lösungen des Wirkstoffs offenbart. WO-96/08150 offenbart ein wasservendüunbares Pesti zidkowzentrat in Form einer Mikroemulsion auf Basis eines Alkylpolyglycosids. EP-729 700 offenbart fungizide Misdungen in form einer Mikroemulsion enthaltend Feblsäuremethylester, amionisdre Tenside sowie Alkylpolyglycoside.

Die bekannten wäßrig formulierten Mittel zeigen in der Praxis häufig noch anwendungstechnische Nachteile. So können sich die Emulsionen bei der Verdünnung mit Wasser trennen. Dieses Problem tritt insbesondere bei der Verdünnung mit elekrolythaltigem Wasser, z.B. Leitungswasser auf, da die Salzionen die hydrophillipophile Balance der Emulgatoren an der Grenzfläche Wasser/Öl stören können. Weiterhin treten Probleme bei der Lagerung bei niedrigen Temperaturen auf, z.B. unter 10 °C, da dann vor der Anwendung häufig eine erneute Homogenisierung der Emulsion notwendig ist.

Die Aufgabe der vorliegenden Erfindung bestand daher darin ökologisch verträgliche, kältestabile und nahezu beliebig verdünnbare wäßrige Emulsionen nicht- bzw. schwerwasserlöslicher agrochemischer Wirkstoffe bereitzustellen.
Es wurde gefunden, daß sich wasserunlösliche agrochemische Wirkstoffe in Gegenwart ausgewählter Emulgatorkombinationen zu Mikroemulsionen mit den gewünschten Eigenschaften verarbeiten lassen.

Gegenstand der vorliegenden Anmeldung ist daher ein flüssiges Wirkstoffkonzentrat in Form einer transparenten Öl-in-Wasser Mikroemulsion, dessen Tröpfchengröße im wesentlichen zwischen 10 und 100 nm liegt, die als Emulgatoren Alkyl(oligo)glycoside der allgemeinen Formel (I)

R-O-[Z]ₓ (I)

enthalten, in der R für einen Alkylrest mit 8 bis 22 C-Atomen, Z für einen Zuckerrest mit 5 oder 6 C-Atomen und x für eine Zahl zwischen 1 und 10 steht und ein organisches wasserunlösliches Lösungsmittel ausgewählt aus NN-Dimethylamiden von C₈₋₂₂-Fetbäuren, Glycerin-C₈₋₂₂-Fettsäureestern natürlichen oder synthetisolun unsprungs, Dialkyletern unit insgesamt 12 bis 24 c-Atomen und/oder einwertigen primären Fettalkohden mit 12 bis 24 C- Atomen enthält.

Die hier beschriebenen Mikroemulsionen sind Emulsionen des Öl-in-Wasser Typs. Sie sind optisch isotrope, thermodynamisch stabile Systeme, die wasserunlösliche Öle, Emulgatoren und Wasser enthalten. Das klare bzw. transparente Aussehen der Mikroemulsionen ist eine Folge der geringen Tröpfchengröße der dispergierten Öle. die im wesentlichen, d.h. zu mehr als 50 %, vorzugsweise zu mehr als 80 % der Tröpfchen, unter 300 nm liegt, wobei im Bereich zwischen 100 und 300 nm feinteilige, in der Durchsicht braunrot und im Auflicht bläulich schimmernde Mikroemulsionen und in dem hier besonders bevorzugten Bereich von 10 bis 100 nm weitgehend optisch klare Mikroemulsionen vorliegen. Der optische Eindruck der klaren Transparenz ist dann besonders gut, wenn die Transmissivität der Emulsion für Licht der Wellenlänge von 650 nm bei mindestens 85 % liegt. Die erfindungsgemäßen Mikroemulsionen sind über einen weiten Temperaturbereich von 0 bis 50 °C stabil.

Als Ölphase enthalten die erfindungsgemäßen Konzentrate den wasserunlöslichen agrochemischen Wirkstoff und gegebenenfalls ein geeignetes wasserunlösliches Lösungsmittel für diesen Wirkstoff. Die erfindungsgemäßen Wirkstoffkonzentrate enthalten die Ölphase, also Wirkstoff, Lösungsmittel und gegebenenfalls weiter in der Ölphase lösliche oder dispergierbare Hilfs- und Zusatzstoffe, bevorzugt in Mengen zwischen 10 und 50 Gew.-%. Der Emulgator zählt im Rahmen der vorliegenden Anmeldung nicht zur Ölphase. Das Lösungsmittel dient dabei zunächst der einfacheren Handhabung der teilweise inhala-tionstoxischen Wirkstoffe, da diese in gelöster Form einfacher zu verarbeiten sind. Es hat sich aber auch gezeigt, daß durch ausgewählte Lösungsmittel die Stabilität der Emulsionen verbessert werden kann.

Als agrochemische Wirkstoffe werden im Rahmen der vorliegenden Anmeldung solche Substanzen verstanden, die zum Pflanzenschutz verwendet werden können, aber auch Herbizide oder Düngemittel. Unter agrochemische Wirkstoffe fallen auch Insektizide, Akarizide, Nematizide, Pestizide, aber auch Repellents oder Rodentizide, Sexuallockstoffe, Säugetier- und Vogelabschreckmittel und Chemosterilantien wie sie z.B. in Chemie der Pflanzenschutz- und Schädlingsbekämpfungsmittel, Band 1, **Herausgeber: R. Wegeler, Springer-Verlag Berlin, 1970, oder in The Pesticide Manual, World Compendium, 8. Auflage, The British Crop Protection Council, 1987,** beschrieben werden. Die agrochemische Wirkstoffe sind wasserunlöslich.

Darunter wird im Rahmen dieser Anmeldung eine Löslichkeit in Wasser bei Raumtemperatur (21 °C) von weniger als 10 Gew.-%, vorzugsweise von weniger als 5 Gew.-% verstanden. Bevorzugt sind solche Wirkstoffe, die zu weniger als 1 Gew.-% in Wasser löslich sind. Die Wirkstoffe können bei Raumtemperatur fest oder flüssig sein.
Die Wirkstoffkonzentrate können Mischungen von wasserunlöslichen Wirkstoffen in beliebigen Mengenverhältnissen enthalten. Zusätzlich können auch wasserlösliche Verbindungen enthalten sein. Bevorzugt sind jedoch solche Konzentrate, die frei von wasserlöslichen agrochemischen Wirkstoffen sind.
Vorzugsweise enthalten die Konzentrate Insektizide, beispielsweise aus der Gruppe der Chlorkohlenwasserstoffe, z.B. Hexachlorcyclohexanderivate oder Cyclodienderivate, Pyrethrine, Pyrethroide, N-Isobutylamide ungesättigter C₈₋₂₂-Fettsäuren, Carbamate oder Phosphorsäureester. Ein bevorzugter insektizider Wirkstoff ist der Nonansäuremethylester. Weitere bevorzugte Wirkstoffe sind Insektenrepellentien, z.B. der 3(N-n-butyl-N-acetylamino)-propionsäuremethylester, das N,N-Diethylcaprylsäureamid oder Diethylm-toluamid. Daneben ist es auch bevorzugt, daß als Wirkstoffe wasserunlösliche Biozide, Fungizide, Herbizide oder Pestizide enthalten sind.
Die Konzentrate enthalten die wasserunlöslichen Wirkstoffe vorzugsweise in Mengen zwischen 10 und 40 Gew.-% und insbesondere zwischen 15 und 30 Gew.-%.

Die bei Raumtemperatur wasserunlöslichen Lösungsmittel (d.h. Löslichkeit kleiner 10 Gew.-%) sind ausgewählt aus Estern von C₁₂₋₂₂-Fettsäuren und primären C₁₋₄-Alkoholen, N,N-Dimethylamiden von C₈₋₂₂-Fettsäuren, einwertigen, primären Fettalkohole mit 12 bis 24 C-Atomen, Glycerin-C₈₋₂₂-Fettsäureestern natürlichen oder synthetischen Ursprungs und Dialkylethern mit insgesamt 12 bis 24 C-Atomen.

Es stellte sich heraus, daß die erfindungsgemäßen Mikroemulsionen besonders leicht gebildet werden, wenn als Lösungsmittel für die Wirkstoffe ein Dialkylether mit insgesamt 12 bis 24 C-Atomen in einer Menge von wenigstens 0,5 Gew.-% enthalten ist. Noch besser eignet sich ein Gemisch aus einem Dialkylether mit insgesamt 12 bis 24 C-Atomen und einem einwertigen, primären Alkohol mit 12 -36 C-Atomen als Lösungsmittel.

Als Dialkylether eignen sich insbesondere solche mit linearen primären Alkylgruppen mit je 6 bis 12 C-Atomen, insbesondere die symmetrischen Di-n-Alkylether, wie z.B. Di-n-Octylether. Als einwertige primäre Alkohole eignen sich bevorzugt flüssige, einfach verzweigte Alkohole wie z.B. 2-Hexyl-decanol oder 2-Octyl-dodecanol. Dialkylether und Alkanol werden bevorzugt in einem Gewichtsverhältnis von 9 : 1 bis 7 : 3 als Lösungsmittel verwendet.

Weitere- bevorzugte Lösungsmittel sind das N,N-Dimethyldekansäureamid sowie Glycerinester, vorzugsweise die Mono- und Diester des Glycerins, mit C₁₂₋₂₂-Fettsäuren, z.B. das Glycerinmono- oder dioleat.

Die Wirkstoffkonzentrate enthalten das Lösungsmittel bzw. Mischungen von Lösungsmitteln vorzugsweise in Mengen zwischen 0,1 und 40 Gew.-%. Bevorzugt sind aber solche Konzentrate, die zwischen 10 und 40 Gew.-% des Lösungsmittels enthalten. Es sind aber, in Abhängigkeit von den eingesetzten Wirkstoffen auf Konzentrate möglich, die frei von wasserunlöslichen Lösungsmitteln sind.

Als nichtionogene Emulgatoren enthalten die erfindungsgemäßen Mikroemulsionen Alkyl(oligo)glycoside der Formel (I)

R-O-[Z]ₓ (I)

in der R für einen Alkylrest mit 8 bis 22 C-Atomen, Z für einen Zuckerrest mit 5 oder 6 C-Atomen und x für eine Zahl zwischen 1 und 10 steht. Alkyl(oligo)glycoside, ihre Herstellung und Verwendung als oberflächenaktive Stoffe sind beispielsweise aus **DE 19 43 689 A1** oder aus **DE 38 27 543 A1** bekannt.

Bezüglich des Glycosidrestes gilt, daß sowohl Monoglycoside, bei denen ein Zuckerrest glycosidisch an den Fettalkohol gebunden ist, als auch oligomere Glycoside mit einem mittleren Oligomerisationsgrad bis etwa 2 besonders geeignet sind. Als Glycosid-Rest ist in den handelsüblichen Alkyloligoglycosiden der Glucosidrest enthalten.

Die nichtionischen Emulgatoren vom Typ der Alkyl(oligo)glycoside sind in den erfindungsgemäßen Konzentraten vorzugsweise in Mengen zwischen 10 und 30 Gew.-% und insbesondere zwischen 10 und 25 Gew.-% enthalten.

Als Hilfs- oder Zusatzstoffe können die Konzentrate auch anionische Tenside, vorzugsweise in Mengen zwischen 1 und 10 Gew.-% enthalten.
Es hat sich gezeigt, daß insbesondere Mikroemulsionen, die anionische Tenside auf Basis von C₁₀₋₁₈-Fettalkoholethersulfate enthalten, besonders vorteilhafte Eigenschaften aufweisen. Fettalkoholethersulfate werden durch Alkoxylierung von primären Fett- bzw. Oxoalkoholen in Gegenwart basischer oder saurer Katalysatoren bei Temperaturen zwischen 150 und 200 °C und Drücken zwischen 1 und 10 bar gewonnen. Die entstandenen Fettalkoholpolyglykolether werden dann mit geeigneten Sulfiermitteln, beispielsweise gasförmigen SO₃ zu den gewünschten Produkten umgesetzt. Bei der Umsetzung des Alkohols mit dem Alkoxid entsteht ein Polyglykolethergemisch unterschiedlich hoch substituierter Homologer, deren Verteilung in Abhängigkeit des Katalysators und der Alkoxid-Menge variieren kann. Geeignete Beispiele hierfür ist Natriumlaurylethersulfat welches pro Mol Ethersulfat 1 bis 10 Mol Ethylenoxideinheiten enthält.

Die anionischen Tenside können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Weitere geeignete anionischen Tenside sind beispielsweise Alkylsulfonate, Alkylsulfate oder Alkylbenzolsulfate. Als Tenside vom Sulfonat-Typ kommen vorzugsweise C₉-₁₃-Alkylbenzolsulfonate, Olefinsulfonate, d.h. Gemische aus Alken- und Hydroxyalkansulfonaten sowie Disulfonaten, wie man sie beispielsweise aus C₁₂-₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht.
Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Die biologisch gut abbaubaren Alkansulfonate werden aus C₁₂-₁₈-Alkanen beispielsweise durch Sulfochlorierung oder Sulfoxidation mit anschließender Hydrolyse bzw. Neutralisation gewonnen. Die Sulfonatgruppe ist dabei über die gesamte Kohlenstoffkette statistisch verteilt, wobei die sekundären Alkansulfonate überwiegen.

Neben den oben beschriebenen Inhaltsstoffen können die Konzentrate noch weitere übliche Hilfs- oder Zusatzstoffe enthalten. Dazu zählen Netzmittel, Entschäumer, Farbund Konservierungsstoffe, weitere nichtionische und kationische Emulgatoren oder wasserlösliche Alkohole mit 1 bis 6 C-Atomen, aber auch anorganische oder organische Säuren zur Stabilisierung des pH-Wertes der Konzentrate. Die erfindungsgemäßen Konzentrate weisen vorzugsweise einen pH-Wert zwischen 5,5 und 7,5 auf. Besonders bevorzugt sind Konzentrate deren pH-Wert zwischen 6 und 7 liegt. Zur Einstellung des pH-Wertes werden insbesondere Polyhydroxycarbonsäuren mit 2 bis 6 C-Atomen und 2 bis 6 Hydroxylgruppen verwendet, z.B. Zitronensäure.
Diese optionalen Hilfs- und Zusatzstoffe sind in der Regel in Mengen zwischen 0,1 und maximal 10 Gew.-% enthalten.

Die erfindungsgemäßen Mikroemulsionen zeichnen sich insbesondere durch ihre Kältestabilität und durch ihre praktisch unbegrenzte Verdünnbarkeit aus. Die Emulsionen lassen sich beispielsweise mit dem 1000fachen ihres Volumens an Wasser verdünnen, ohne daß es zur Koaleszenz der emulgierten öllöslichen Wirkstoffe kommt. Dabei kann als Verdünner entsalzte Wasser, wie es im Labor- oder Produktionsbereich vorliegt verwendet werden. Es ist aber auch möglich, die erfindungsgemäßen Konzentrate mit üblichem Leitungswasser, welches Elektrolytkonzentrationen im Bereich von 0,001 bis zu 1,0 g/l enthält, zur Verdünnung einzusetzen. Übliche anionische Elektrolyte sind dabei Chloride, Sulfate, Carbonate oder Hydrogencarbonate. Als Kationen sind z.B. Natrium-, Kalium-, Magnesium- aber auch Eisenionen enthalten. Die Wirkstoffkonzentrate können unverdünnt oder vorzugsweise verdünnt angewendet werden.

Ein weiterer Gegenstand der vorliegenden Erfindung betrifft ein Verfahren zur Herstellung von agrochemische Wirkstoffe enthaltenden, gebrauchsfertigen Zubereitungen, wobei ein Wirkstoffkonzentrat gemäß der obigen Beschreibung mit Leitungswasser im Verhältnis 1 : 10 bis 1 : 1000 verdünnt wird

Die Herstellung der erfindungsgemäßen Konzentrate erfolgt nach den im Stand der Technik bekannten Verfahren. Üblicherweise wird zunächst der agrochemische Wirkstoff in einem geeigneten Lösungsmittel - ggf. unter Erwärmung - gelöst und diese Mischung dann zu der wäßrigen Lösung der anderen Komponenten zugeführt. Die Emulsion wird dann bei Temperaturen zwischen 20 und 80 °C intensiv vermischt, bis eine stabile Mikroemulsion entstanden ist.

### Beispiele

Beispiele für erfindungsgemäße Mikroemulsionen finden sich in Tabellen 1a und 1b. Die Emulsionen wurden hergestellt indem zunächst die agrochemischen Wirkstoffe in der Ölphase gelöst und dann diese Lösung mit den Emulgatoren und Hilfsstoffen in Wasser emulgiert wurde. Als agrochemische Wirkstoffe wurden die Insekten-Repellents Irgasan DP 300, Myacide SP, 3535 und 790 sowie der herbizide Wirkstoff Nonansäuremethylester verwendet.
Die Transparenz der Emulsionen wurde bei Raumtemperatur mit einem Lichtleiterphotometer der Firma Metrohm, Modell 662, über eine optische Wegstrecke von 10 mm und einer Wellenlänge von 650 nm gemessen. Alle erfindungsgemäßen Emulsionen waren wasserklar.
Zusätzlich wurden die Emulsionen mit Leitungswasser im Gewichtsverhältnis 1 : 10 bzw. 1 : 1000 verdünnt. Anschließend wurden die verdünnten Mikroemulsionen visuell bewertet.
Die Werte bedeuten:
0: klar
1: leicht bläuliche Opaleszenz
2: bläulich-weiß
3: trüb-grau
4: Phasenseparation

### Inhaltsstoffe:

| | |
|---|---|
| APG 220 | C₈₋₁₀-Alkylglucosid mit x = 1,5 (Fa. Henkel) |
| Texapon N 70 | Laurylethersulfat-Natrium-Salz ethoxyliert mit 2,3 Teilen Ethylenoxid (Fa. Henkel) |
| Irgasan DP 300 | 2,4,4-Trichlor-2-hydroxy-diphenylether (Fa. Ciba-Geigy) |
| Myacide SP | 2,4-Dichlorbenzylalkohol (Fa. Boots Biocides Group) |
| Isekten-Repellent 790 | N,N-Diethylcaprylsäureamid (Fa. Merck) |
| Insekten-Repellent 3535 | 3-(N- n-butyl-N-acetylamino)propionsäuremethylester (Fa. Merck) |

**Tabelle 1a**

| (Angaben in Gew.-% Aktivsubstanz) | | | | |
|---|---|---|---|---|
| | 1 | 2 | 3 | 4 |
| APG 220 | 32,50 | 32,50 | 31,20 | 30,55 |
| Glycerinmonooleat | 6,75 | 7,00 | 7,70 | 7,50 |
| Laurinsäuremethylester | | | 26,40 | 25,90 |
| Nonansäuremethylester | 27,50 | 27,50 | | |
| Irgasan DP 300 | | | 4,00 | 6,00 |
| Zitronensäure | 0,25 | 0,25 | 0,25 | 0,25 |
| Wasser | 33,00 | 32,75 | 30,50 | 29,80 |
| Wasserverdünnbarkeit 1 : 10 | 0 | 0 | 0 | 0 |
| Wasserverdünnbarkeit 1 : 1000 | 0 | 0 | 0 | 0 |

**Tabelle 1b**

| (Angaben in Gew.-% Aktivsubstanz) | | | | | | |
|---|---|---|---|---|---|---|
| | 5 | 6 | 7 | 8 | 9 | 10 |
| APG 220 | 20,0 | 14,0 | 24,0 | 24,0 | 30,0 | 18,0 |
| N,N-Dimethyldekansäureamid | 40,0 | 40,0 | 30,0 | 30,0 | | |
| Di-n-Octylether | | | 10,0 | 16,0 | | 3,75 |
| Texapon N 70 | 4,0 | 10,0 | 2,4 | 2,4 | | 4,5 |
| Irgasan DP 300 | | | 6,0 | 6,0 | | |
| Myacide SP | 8,0 | 8,0 | | | | |
| Insekten Repellent 3535 | | | | | 45,0 | |
| Insekten Repellent 790 | | | | | | 30,0 |
| Zitronensäure | 0,4 | 0,3 | 0,5 | 0,5 | 0,3 | 0,3 |
| Wasser | 27,6 | 27,7 | 27,1 | 21,1 | 52,5 | 43,45 |
| Wasserverdünnbarkeit 1 : 10 | 1 | 1 | 0 | 0 | 0 | 1 |
| Wasserverdünnbarkeit 1 : 1000 | 0 | 0 | 0 | 0 | 0 | 0 |

Zum Verleich wurden zwei Emulsionen V1 und V2 ohne Alkyl(oligo)glycoside als Emulgatoren untersucht (Tabelle 2). Diese Emulsionen zeigten bei Verdünnung mit Wasser eine deutliche Phasenseparation.

**Tabelle 2**

| (Angaben in Gew.-% Aktivsubstanz) | | |
|---|---|---|
| | V1 | V2 |
| N,N-Dimethyldekansäureamid | 40,0 | 30,0 |
| Di-n-Octylether | | 10,0 |
| Texapon N 70 | 24,0 | 24,0 |
| Irgasan DP 300 | | 6,0 |
| Myacide SP | 8,0 | |
| Wasser | 28,0 | 30,0 |
| Wasserverdünnbarkeit 1 : 10 | 4 | 4 |
| Wasserverdünnbarkeit 1 : 1000 | 3 | 3 |

## Patentansprüche

1. Flüssiges Wirkstoffkonzentrat in Form einer transparenten Öl-in-Wasser Mikroemulsion, deren Tröpfchengröße bei mehr als 80 % der Tröpfchen zwischen 10 und 100 nm liegt, enthaltend als Emulgatoren Alkyl(oligo)glycoside der allgemeinen Formel (I)
R-O-[Z]ₓ (I)
in der R für einen Alkylrest mit 8 bis 22 C-Atomen, Z für einen Zuckerrest mit 5 oder 6 C-Atomen und x für eine Zahl zwischen 1 und 10 steht und gegebenenfalls weitere Hilfs- und Zusatzstoffe, **dadurch gekennzeichnet, daß** die Ölphase einen wasserunlöslichen agrochemischen Wirkstoff und ein organisches wasserunlösliches Lösungsmittel, ausgewählt aus N,N-Dimethylamiden von C₈₋₂₂-Fettsäuren, Glycerin-C₈₋₂₂-Fettsäureestern natürlichen oder synthetischen Ursprungs, Dialkylethern mit insgesamt 12 bis 24 C-Atomen und /oder einwertigen, primären Fettalkoholen mit 12 bis 24 C-Atomen, enthält.

2. Wirkstoffkonzentrat nach Anspruch 1, **dadurch gekennzeichnet, daß** die Ölphase in Mengen von 10 bis 50 Gew.-% enthalten ist.

3. Wirkstoffkonzentrat nach Anspruch 1 bis 2, **dadurch gekennzeichnet, daß** Alkyl(oligo)glycoside der allgemeinen Formel (I) in Mengen von 10 bis 30 Gew.-% enthalten sind.

4. Wirkstoffkonzentrat nach einem der Ansprüche 1 bis 3, **dadurch gekennzeichnet, daß** als Zusatzstoffe anionische Tenside in Mengen zwischen 1 und 10 Gew.-% enthalten sind.

5. Wirkstoffkonzentrat nach Anspruch 4, **dadurch gekennzeichnet, daß** C₁₀₋₁₈-Fettalkoholethersulfate enthalten sind.

6. Wirkstoffkonzentrat nach einem der Ansprüche 1 bis 5, **dadurch gekennzeichnet, daß** die agrochemischen Wirkstoffe in Mengen zwischen 10 und 40 Gew.-% enthalten sind.

7. Wirkstoffkonzentrat nach einem der Ansprüche 1 bis 6, **dadurch gekennzeichnet, daß** als agrochemische Wirkstoffe Biozide, Fungizide, Herbizide, Insektizide und Insekten-Repellents enthalten sind.

8. Wirkstoffkonzentrat nach einem der Ansprüche 1 bis 7, **dadurch gekennzeichnet, daß** als agrochemischer Wirkstoff Nonansäuremethylester enthalten ist.

9. Wirkstoffkonzentrat nach einem der Ansprüche 1 bis 8, **dadurch gekennzeichnet, daß** keine wasserlöslichen agrochemischen Wirkstoffe enthalten sind.

10. Verfahren zur Herstellung einer agrochemische Wirkstoffe enthaltenden Zubereitung, **dadurch gekennzeichnet, daß** ein Wirkstoffkonzentrat gemäß Anspruch 1 mit Leitungswasser im Verhältnis 1 : 10 bis 1 : 1000 verdünnt wird.

## Claims

1. A liquid agrochemical concentrate in the form of a transparent oil-in-water microemulsion, of which 80% of the droplets are between 10 and 100 nm in size, containing alkyl (oligo)glycosides corresponding to general formula (I):
R-O-[Z]ₓ (I)
in which R is an alkyl group containing 8 to 22 carbon atoms, Z is a sugar unit containing 5 or 6 carbon atoms and x is a number of 1 to 10,
as emulsifiers and optionally other auxiliaries and additives, **characterized in that** the oil phase contains a water-insoluble agrochemical and an organic water-insoluble solvent selected from N,N-dimethyl amides of C₈₋₂₂ fatty acids, glycerol C₈₋₂₂-fatty acid esters of natural or synthetic origin, dialkyl ethers containing a total of 12 to 24 carbon atoms and/or monohydric primary fatty alcohols containing 12 to 24 carbon atoms.

2. A concentrate as claimed in claim 1, **characterized in that** the oil phase is present in quantities of 10 to 50% by weight.

3. A concentrate as claimed in claim 1 or 2, **characterized in that** it contains alkyl (oligo)glycosides corresponding to general formula (I) in quantities of 10 to 30% by weight.

4. A concentrate as claimed in any of claims 1 to 3, **characterized in that** it contains anionic surfactants in quantities of 1 to 10% by weight as additives.

5. A concentrate as claimed in claim 4, **characterized in that** it contains C₁₀₋₁₈ fatty alcohol ether sulfates.

6. A concentrate as claimed in any of claims 1 to 5, **characterized in that** the agrochemicals are present in quantities of 10 to 40% by weight.

7. A concentrate as claimed in any of claims 1 to 6, **characterized in that** biocides, fungicides, herbicides, insecticides and insect repellents are present as the agrochemicals.

8. A concentrate as claimed in any of claims 1 to 7, **characterized in that** nonanoic acid methyl ester is present as the agrochemical.

9. A concentrate as claimed in any of claims 1 to 8, **characterized in that** it does not contain any water-soluble agrochemicals.

10. A process for the production of a preparation containing agrochemicals, **characterized in that** the concentrate claimed in claim 1 is diluted with tap water in a ratio of 1:10 to 1:1000.

## Revendications

1. Concentré liquide de substance active sous la forme d'une micro-émulsion huile-dans-eau transparente dont la taille des gouttelettes, pour plus de 80% des gouttelettes, se situe entre 10 et 100 nm, contenant comme émulsifiants des alkyl(oligo)glycosides de formule générale (I)
R - O - [Z]ₓ (I)
dans laquelle R représente un radical alkyle comportant de 8 à 22 atomes de carbone, Z représente un radical sucré comportant 5 ou 6 atomes de carbone et x représente un nombre compris entre 1 et 10, et le cas échéant d'autres adjuvants et additifs,
**caractérisé en ce que**
la phase huileuse contient une substance active agrochimique insoluble dans l'eau et un solvant organique insoluble dans l'eau, choisi parmi les N,N-diméthylamides d'acides gras en C₈ à C₂₂, les esters d'acides gras en C₈ à C₂₂ de glycérine d'origine naturelle ou synthétique, les éthers de dialkyle comportant au total de 12 à 24 atomes de carbone et/ou les alcools gras primaires monovalents comportant de 12 à 24 atomes de carbone.

2. Concentré de substance active selon la revendication 1,
**caractérisé en ce que**
la phase huileuse est contenue en quantités de 10 à 50% en poids.

3. Concentré de substance active selon les revendications 1 et 2,
**caractérisé en ce que**
les alkyl(oligo)glycosides de formule générale (I) sont contenus en quantités de 10 à 30% en poids.

4. Concentré de substance active selon l'une des revendications 1 à 3,
**caractérisé en ce qu'**
on y trouve comme additifs des agents tensio-actifs anioniques à des quantités comprises entre 1 et 10% en poids.

5. Concentré de substance active selon la revendication 4,
**caractérisé en ce qu'**
on y trouve des éther-sulfates d'alcools gras en C₁₀ à C₁₈.

6. Concentré de substance active selon l'une des revendications 1 à 5,
**caractérisé en ce que**
les substances actives agrochimiques sont contenues en quantités comprises entre 10 et 40% en poids.

7. Concentré de substance active selon l'une des revendications 1 à 6,
**caractérisé en ce qu'**
on y trouve comme substances actives agrochimiques des agents biocides, fongicides, herbicides, insecticides et répulsifs d'insectes.

8. Concentré de substance active selon l'une des revendications 1 à 7,
**caractérisé en ce qu'**
on y trouve comme substance active agrochimique le nonanoate de méthyle.

9. Concentré de substance active selon l'une des revendications 1 à 8,
**caractérisé en ce qu'**
on n'y trouve aucune substance active agrochimique soluble dans l'eau.

10. Procédé de production d'une préparation contenant une substance active agrochimique,
**caractérisé en ce qu'**
on dilue un concentré de substance active selon la revendication 1 avec de l'eau du robinet dans un rapport de 1 :10 à 1 :1000.
